# EUROPEAN PATENT SPECIFICATION

(11) **EP 2 662 277 B1**
(45) Date of publication and mention of the grant of the patent: **02.09.2015**
(21) Application number: 13167197.6
(22) Date of filing: 09.05.2013
(51) Int. Cl.: B63H 23/30, B63H 21/20, H02K 7/108, B60K 6/387, B60K 6/40, B60K 6/48, B60K 6/485

(54) **Hybrid marine propulsion**
Hybrider Schiffsantrieb
Propulsion marine hybride

(30) Priority: 10.05.2012 IT PC20120014; 30.01.2013 IT PC20130006
(43) Date of publication of application: 13.11.2013
(73) Proprietor: R.T.N. S.r.l., 29011 Borgono Val Tidone (PC) (IT)
(72) Inventor: Amici, Alberto, 29011 Borgonovo Val Tidone (PC) (IT); Maggi, Angelo, 29011 Borgonovo Val Tidone (PC) (IT); Balordi, Simone, 29011 Borgonovo Val Tidone (PC) (IT)
(74) Representative: Fisauli, Beatrice A. M.

(56) References cited:
- CA-A1- 2 778 213
- SI-A- 22 377
- US-A- 4 010 377
- US-A- 4 080 843
- US-A1- 2006 025 025
- US-A1- 2009 209 146
- US-A1- 2011 057 459

## Description

The present invention proposes an auxiliary propulsion system, particularly an auxiliary hybrid propulsion system for boats.

In detail, the invention relates to a diesel-electric auxiliary propulsion system adapted to replace or assist the endothermic engine (generally a diesel) usually mounted on medium and large-size craft.

Auxiliary propulsion is currently widely used by large commercial ships for maneuvering on entering and leaving port, but it has recently been increasingly used also on small and medium-size craft. The characteristics of a marine propulsion system, normally consisting of supercharged diesel engines and transmissions with speed reduction units interposed between the engine and the propeller, are calculated on the basis of the ship's maximum speed.

This type of propulsion, in which the propeller characteristics (diameter, stroke, expansion area) and the reduction ratio between the engine and the propeller are fixed at the design stage, is therefore poorly adapted for operating at lower speeds than the design speed (the supercharged engine, working at lower speeds, is more subject to wear, breakage, and malfunction of the turbines, and requires more maintenance).

Travelling at low speed also increases the amount of vibrations coming from the engines, which, in addition to reducing reliability, can also increase fuel consumption.

For these reasons, increasing efforts are being made to develop propulsion systems that can enable a craft to travel at a speed lower than the cruising speed (or design speed), without risking damage to the engine.

To this end, given the current state of technology, alternative propulsion systems are used, mainly in the form of electric motors of lower power than the main diesel engine, which are connected alternatively to the same axle line as the main diesel engine.

It is therefore possible to decide whether to travel with the diesel (main engine) operating at 100% power or to choose an auxiliary engine for a "calmer" pace.

Furthermore, in the case where the alternative engine is an electric motor, there is a notable reduction in noise and vibrations, with greater comfort, thanks to the use of generator units that are sound-proofed and isolated by means of elastic supports.

A further notable advantage of using these auxiliary propulsion systems is that they have energy consumption and emission levels that are much lower than the main diesel engine; this means that the craft is allowed entry to protected areas where there are restrictions on exhaust emission (especially in the case where the power for the electric motor comes from a battery).

As mentioned above, various types of auxiliary propulsion systems with electric motors exist.

In particular, these known propulsion systems are characterized by two different ways of connecting the electric motor to the transmission system driving the craft's propeller.

A first way in which the electric motor is connected between the internal combustion engine and the gear reducer (on the "primary" side of the reducer), and a second way in which it is connected to a pinion of the reducer (therefore on the "secondary" side) on the main transmission.

The terms "primary" or "secondary" when referring to a reducer fitted with a clutch are intended to mean respectively all of the components upstream of the clutch and all of the components downstream of the clutch.

The present invention relates specifically to an auxiliary propulsion system on the "primary" side.

More specifically, the invention relates to an auxiliary hybrid propulsion system with an auxiliary electric motor shrunk directly on to the main axle that, by means of a "free standing" type elastic joint, transmits power directly to the reducer input axle.

This type of connection is now possible thanks to technical advances in the field of electric motors, which manage to deliver increasingly high levels of power and torque combined with smaller and smaller dimensions and sizes.

However, so as not to upset the construction architecture of the axle propulsion-transmission-line assembly, these auxiliary systems need to have an axial dimension (along the propeller axis) as short as possible.

In detail, these systems involve interposing an auxiliary electric motor between the main diesel engine and the main transmission reducer, directly shrunk on to the power drive shaft. The connection is such that when the diesel engine is operating, it turns the axle line, or, when the diesel engine is not operating, it is the said auxiliary electric motor that turns the axle line.

To do this, however, clutch-type means are required, adapted to connect or disconnect the axle line from the diesel engine, otherwise, if the auxiliary electric motor were to operate at the same time, it would turn the components of the diesel engine together with the axle line.

Known clutch types, such as those usually used in reducers or in reversing units, however, have a series of disadvantages that make them difficult to apply to an auxiliary propulsion system such as that described above.

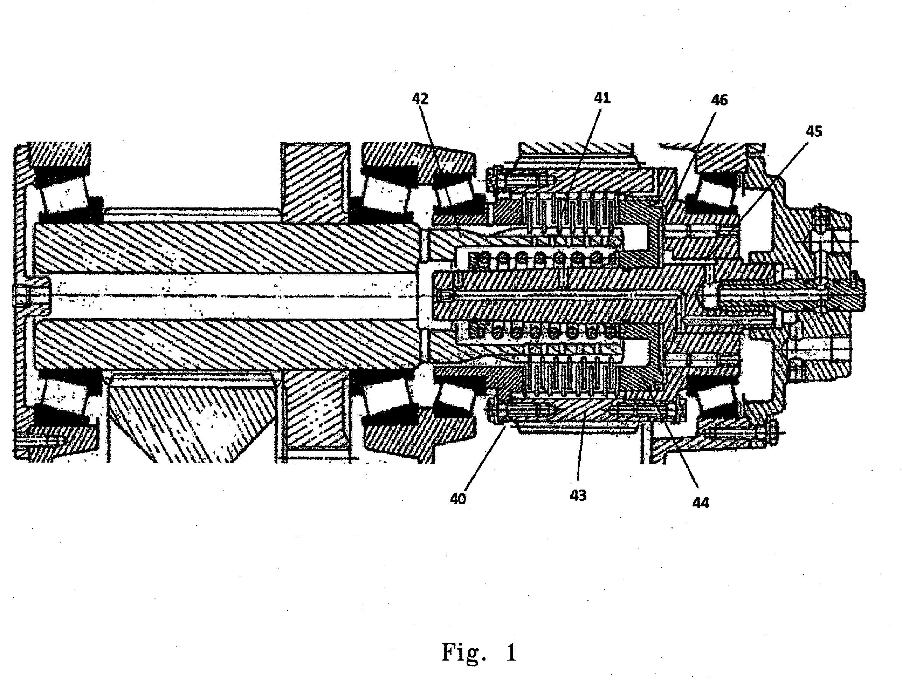

An example of this type of clutch is described with reference to figure 1 of the accompanying drawings.

In detail, said clutches 40 are hydraulic clutches comprising a disc pack 41, in one piece partly with the first rotating element 42 (in this case a drive shaft) and partly with the second rotating element 43 (in this case a case with an external serrated edge that couples with another toothed wheel) and driven by a hydraulic piston indicated by number 44.

A first problem with this type of clutch, in an auxiliary propulsion system, is the supply of the pressurized oil feeding the piston 44.

In fact, these clutches are usually fed by an external pump through a conduit 45 on the inside of the case 43 that carries the oil to the piston chamber 46.

In an auxiliary propulsion system interposed directly between the diesel engine and the axle line, it is not possible to gain access to the center of the axle because both ends are "occupied", by the main engine on one end, and by the reducer on the other. It would only be possible by offsetting the system using a toothed-wheel stage, which would lead to considerable complications and increase the dimensions of the system. A further disadvantage is the axial size of the piston assembly, which depends both on the conformation of the piston and on the dimensions of the piston return springs, which take up a certain longitudinal space.

Usually, these clutches work at operating pressures of 20-25 bar, which require the use of specially made oil-tight gaskets (known as "mechanical" gaskets) with considerable axial sizes, complicated management and maintenance.

The dimensions of a traditional clutch assembly would therefore not allow for the construction of a simple, reliable auxiliary propulsion system with total axial dimensions within the parameters given above, i.e. of a size that would enable the construction architecture of the propulsion-transmission-axle line assembly to remain unchanged.

Some manufacturers have also produced auxiliary propulsion systems provided with toothed mechanical engagement systems or similar requiring limited force for engagement and disengagement of the main diesel engine with the axle line. However, these mechanisms also have certain disadvantages: first of all, the axial dimensions are still too large, and furthermore, with a mechanical engagement system of this type, each time the user wishes to engage or disengage the mechanism, the entire propeller axle line needs to be stopped beforehand.

Document CA 2 778 213 A1, which discloses a system according to the preamble of claim 1, describes an hybrid marine propulsion device which comprises a main engine, a clutch, which is provided to the input shaft of the main engine; an horizontal input/output shaft, which is connected to the clutch; a vertical shaft which is joined to the input/output shaft by means of an upper bevel gear; an horizontal propeller axis which is joined to a bottom tip of the vertical shaft by means of a lower bevel gear. A motor-generator is attached on top of a base and directly connected to the other end side of the input/output shaft to where the vertical shaft is located.

In this context, the aim of the present invention is to propose an auxiliary propulsion system that can overcome the aforementioned problems associated with the known art.

In particular, the aim of the present invention is to provide an auxiliary propulsion system, particularly for boats, of the type connected directly to the reducer input axle (between the endothermic engine and the reducer), that has small axial dimensions.

Specifically, the aim of the present invention is to produce an auxiliary propulsion system provided with clutch engagement and disengagement controls that are simple to manufacture, economical and reliable.

More specifically, the aim of the present invention is to produce an auxiliary propulsion system provided with a fully mechanical clutch engagement and disengagement system, so that pressurized hydraulic circuits can be eliminated.

A further aim of the invention is to provide an auxiliary propulsion system that can be used either as a generator, using the power of the diesel engine, or together with the main engine to increase the maximum power available (booster function).

These specific aims are substantially achieved by an auxiliary propulsion system comprising the technical characteristics described in one or more of the accompanying claims.

According to the invention the auxiliary propulsion system comprises
- a case (5) adapted to be connected to at least one input or output device;
- a first flange (8) connectable to a power input;
- a power drive shaft (6) with a first end placed substantially in a position corresponding to said first flange (8) and a second end opposite said first end;
- a second flange (20) in one piece with said power drive shaft (6) placed in a position corresponding to said second end;
- an electric motor (9) comprising a stator (31) fixed to the case (5) and a rotor (32) fixed to a portion of the second flange (20);
- a clutch (10) comprising a first disc assembly (11) rotating as a unit with said first flange (8), a second disc assembly (12) rotating as a unit with said power drive shaft (6), there being provided means of engagement adapted to engage said first disc assembly (11) with said second disc assembly (12), wherein said means comprise a piston (28) adapted to compress said first and said second disc assemblies (11, 12) to make them rotate as a unit, said piston (28) being connected in an articulated manner to at least one centrifugal weight (22) rotating as a unit with the first flange (8).

Further characteristics and advantages of the present invention will become more apparent from the following indicative, and therefore non-limiting, description of an example of a preferred but not exclusive embodiment of the auxiliary propulsion system, as illustrated in the accompanying drawings, in which:
- figure 2a shows a perspective view with a schematic illustration of an example of the connection between the auxiliary propulsion system described by the present invention and the propulsion-line transmission system of a boat.
- figure 2b shows a perspective view of an example of installation on a boat of a propulsion-transmission system provided with the auxiliary propulsion system described by the present invention;
- figure 3 shows a cross-section view of the auxiliary propulsion system according to the present invention;
- figure 4 shows a detail of the auxiliary propulsion system shown in figure 3.

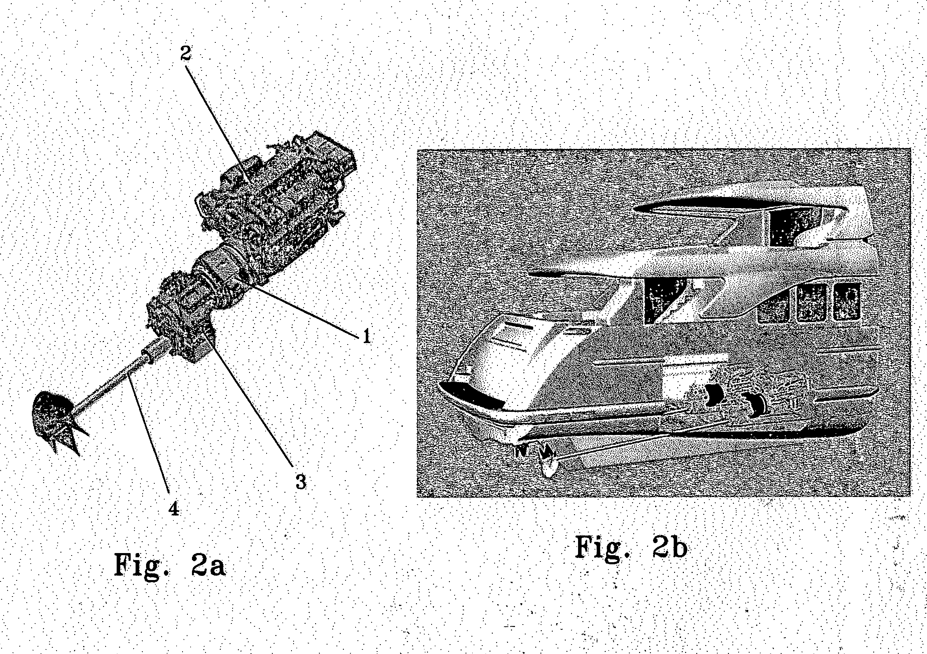

With reference to figure 2a, the auxiliary propulsion system indicated by the number 1 is connected on the input side of the main engine 2 (generally a diesel engine) and on the output side of the reducer 3 on the main transmission, which in turn transmits movement to the propeller axle line, indicated with the number 4.

In boats that are not provided with said auxiliary propulsion system, the reducer 3 is directly connected to the engine output; it is therefore understandable just how important it is to produce an auxiliary propulsion system 1 characterized by having the smallest possible axial dimensions so as not to have to substantially alter the layout of the propulsion-transmission-axle line system.

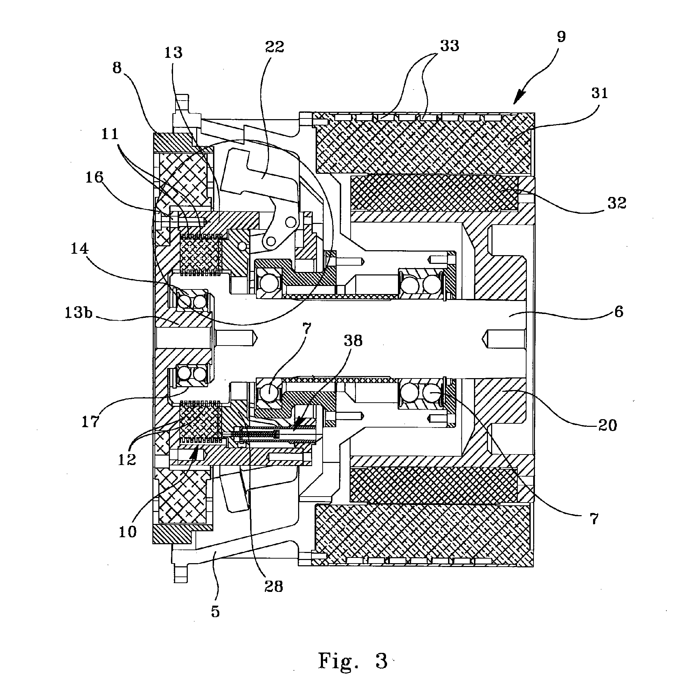

Figure 3 shows a detailed cross-section view of the auxiliary propulsion system 1 shown in figure 2.

Said auxiliary propulsion system comprises a case 5 adapted to be connected on one side to a main engine 2 by means of a connecting bell housing with SAE standardization, and on the other side to a reducer-reverser 3 normally fitted with elastic supports and therefore supported separately from the main diesel engine.

Said case 5 houses an electric motor, preferably a ring (or torque) type motor, indicated by the number 9, and all the components of the auxiliary propulsion system 1 described in detail below.

Preferably, said electric motor 9 may be an asynchronous motor with a squirrel-cage rotor, or alternatively a synchronous motor with permanent magnets.

Said propulsion system 1 comprises a power drive shaft 6, supported in the case 5 by a pair of bearings 7, adapted to transmit movement from the engine 2 to the reducer 3.

In particular, the movement is transmitted from the engine 2 to the power drive shaft 6 through a clutch unit indicated by the number 10.

Preferably, a first flange 8, provided with an elastic joint, is interposed between the main engine 2 and said clutch unit 10 to dampen the vibro-torsional vibrations generated in the propulsion system.

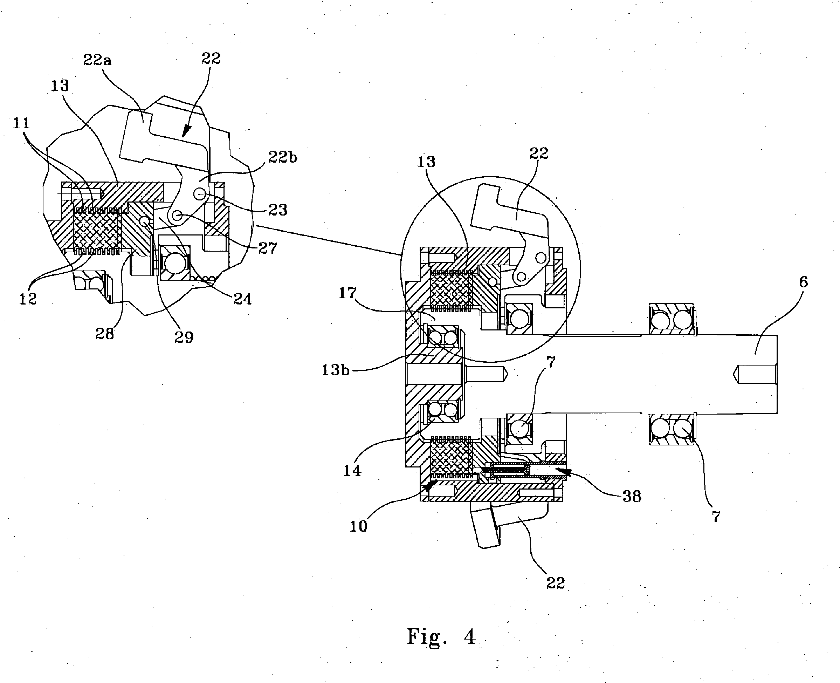

With reference to figure 4, said clutch unit 10 comprises a first disc assembly 11 (outer discs) rotating as a unit with the first flange 8, and a second disc assembly 12 (inner discs) rotating as a unit with the power drive shaft 6.

More specifically, said first disc assembly 11 is mounted on a bell housing 13 supported from the power drive shaft 6 by at least one bearing 14 and connected to the first flange 8 by screws 16.

The second disc assembly 12, on the other hand, is mounted on a sleeve 17 housed inside the bell housing 13 and connected as a unit to the power drive shaft 6.

According to a preferred variant, said sleeve 17 is manufactured as a unit with the power drive shaft 6.

Preferably, the bell housing 13 is shaped so as to have a central portion 13b that projects into the sleeve 17 of the power drive shaft 6 and is supported on it by a bearing 14. According to another variant (not shown in the figure) the bell housing 13 may also be directly supported by the case 5 by means of an additional bearing (not shown).

At the opposite end of the power drive shaft 6 (on the right when looking at figure 3) there is a second flange 20, in turn connected to a secondary axle (not shown in the figure) by means of a "free standing" elastic joint, for transmitting movement towards the reducer-reverser on the main transmission 3.

Clutch engagement 10 is achieved by making said first disc assembly 11 as single unit with said second disc assembly 12, through means of engagement.

A characteristic of the invention is that it includes said means of engagement, comprising a piston 28 adapted to compress said first and said second disc assemblies 11 and 12 to make them rotate as a unit. More specifically, according to the invention, said piston 28 is connected in an articulated manner to at least one centrifugal weight 22 rotating as a unit with the flange 8.

Specifically, said at least one centrifugal weight 22 is hinged to the bell housing 13 with the possibility of rotating on an axis substantially perpendicular to the axis of the power drive shaft 6.

According to a preferred variant, the system is provided with a plurality of centrifugal weights 22 arranged angularly equidistant on said bell housing 13.

When the endothermic (main) engine 2 is rotating, said centrifugal weights 22 are subject to a centrifugal force that increases with the speed of rotation of the main engine 2.

More specifically, said centrifugal weights 22 are each hinged to the bell housing 13 by means of a first pin 23, arranged perpendicular to the axis of the power drive shaft 6, with the possibility of rotating on said axis and shifting their center of gravity away from the axis of the power drive shaft 6.

Each centrifugal weight 22 is therefore connected in an articulated manner to the piston 28 so as to exert a force on said piston as a result of rotation around said pin 23, in order to compress the clutch discs 11 and 12.

More specifically, each weight is connected to a connecting rod 24, by means of a second pin 27, which is in turn connected to the piston 28 by means of a third pin 29.

Said piston 28 is slidingly mounted inside the bell housing 13 and is in contact with the disc assemblies 11 and 12 of the clutch 10.

When the bell housing 13 rotates, the centrifugal weights 22 are subjected to a centrifugal force that, acting on the center of gravity of the weights, causes them to rotate with respect to the first pin 23.

Said rotation causes each weight 22 to push the connecting rod 24, which in turn exerts an axial force on the piston 28 substantially parallel to the axis of the power drive shaft 6.

The sum of the forces exerted by each centrifugal weight 22 is passed on by the piston 28 to the discs 11 and 12 of the clutch 10, which adhere to one another and allow the transmission of power from the primary axle (connected to the main engine 2) to the power drive shaft 6.

According to a preferred embodiment, said centrifugal weights 22 have a substantially L-shape cross section with a first portion 22a, which when not in operation is arranged substantially parallel to the axle of the power drive shaft 6, and a second portion 22b constituting the connecting arm with the connecting rod 24.

More specifically, the first portion 22a of the centrifugal weight 22 is shaped such that its cross-section increases at the end opposite the end where it is connected to the pin 23. In this manner, the distance between the center of gravity of the centrifugal weight 22 and the hinge point on the first pin 23 is increased, thereby enabling the force exerted on the piston 28 to be multiplied. For the same required thrust, the mass (and therefore the volume) of the centrifugal weights can be reduced 22.

As mentioned above, the electric motor 9 is preferably an asynchronous electric motor with a squirrel-cage rotor capable of delivering enough power and torque, with quite small axial dimensions with respect to traditional synchronous motors.

Furthermore, said motors guarantee excellent electronic speed regulation, enabling the auxiliary motor to be used as a "booster" alongside the main diesel engine.

With reference to figure 3, the electric motor 9 comprises a stator 31 fixed to the case 5 and a squirrel-cage rotor 32 fixed to the second flange 20.

On the outer part of the stator 31 there is a series of passages 33 to allow the circulation of a coolant adapted to keep the temperature of the motor within appropriate values.

System operation is described below:
when the craft travels under the power of the main endothermic engine, the clutch unit 10 must be engaged. This is done automatically when the main endothermic engine is switched on. In fact, even at the minimum rotation speed of the main engine 2, the centrifugal weights 22 exert sufficient thrust on the piston 28 to prevent the clutch discs 11 and 12 from slipping, thereby enabling them to transmit power from said main engine 2 to the reducer-reverser 3 input axle.

Specifically, the power from the main engine 2 is transmitted by the flange 8, which acts as a unit with the bell housing 13, by means of the discs 11 which, since they act as a unit with the discs 12, transmit the power through the sleeve 17, which in turn acts as a unit with the power drive shaft 6.

From the power drive shaft 6, the power is transmitted to the reducer 3 by means of the flange 20 connected to the secondary axle by an elastic joint.

When sailing in this manner, the main endothermic engine turns the rotor 32 of the electric motor 9 fixed to the second flange 20, even if this is de-activated (not switched on). Preferably, the rotated motor 9 may be used as an electricity generator. This type of operation, known as "shaft generator", enables the size of the auxiliary generators to be reduced and enables the main endothermic engine to be used as an electricity generator. When the user wishes to use only auxiliary electrical propulsion when sailing in diesel-electric mode, or the battery, the clutch unit 10 needs to be dis-engaged in order to disconnect the main engine 2 from the downstream components.

If not, the electric motor would rotate not only the reducer 3 and the axle line 4, but also all the moving components of the main engine 2.

Such a situation would obviously be unacceptable because it would damage the main engine and result in needless extra energy consumption.

To dis-engage the clutch unit 10, simply reduce the speed of the main engine until it stops (in practice by switching off the engine).

When said main engine 2 has stopped turning, the centrifugal weights 22, which are no longer subject to any centrifugal force, no longer exert any thrust on the piston 28.

The clutch discs 11 and 12 no longer transmit movement from the primary axle to the secondary axle. The electric motor 9 will therefore be able to transmit power to the reducer-reverser 3 without turning the main engine 2.

Preferably, the system is provided with a return device 38 intended to return the piston 28 to a rearward position, and to facilitate the dis-engagement of the clutch once the main engine 2 has stopped. Said return device comprises elastic means adapted to exert an axial force contrary to that exerted by the centrifugal weights 22.

Said return device 38 may also be configured so as to block unwanted rotation of the piston 28 when the clutch is not engaged or, alternatively, even the rotation of the centrifugal weights 22 around the pin 23.

The electric motor 9 can also be used at the same time as the main engine 2 ("booster" function); in this case, the clutch unit 10 remains engaged due to the rotation of the bell housing 13, which moves the centrifugal weights 22 and drives the piston 28.

In this mode, electronic control of the electric motor 9 instantaneously regulates its speed to keep it at the same number of revs as the main engine 2.

Thanks to the present invention, it is possible to produce an auxiliary propulsion system, particularly for boats, that is characterized by having the smallest possible axial dimensions, and that is simple and economical, since it is not provided with control systems other than the clutch, or with hydraulic circuits and therefore pumps, heat exchangers and associated control components.

For example, for a propulsion system fitted with a 1000 Kw main diesel engine and a 90 kW auxiliary electric motor, it is possible to produce an auxiliary propulsion system like the one described, with an axial size of around 50 cm.

The use of a disc clutch also makes it possible to switch propulsion from the main diesel engine to the auxiliary electric motor without having to bring the axle line to a complete. For example, when the main engine is switched on, the clutch is engaged automatically, and when the main engine is switched off the clutch is dis-engaged automatically, thereby enabling the auxiliary electric motor to be used immediately.

Furthermore, the propulsion system thus configured may be used either as an auxiliary alternative propulsion to the main diesel engine, or as a "booster" operating alongside said main engine.

Several changes and variations can be made to the present invention as described and illustrated, all falling within the scope of the inventive concept; moreover, all details can be replaced with technically equivalent elements.

## Claims

1. An auxiliary propulsion system comprising:
- a case (5) adapted to be connected to at least one input or output device;
- a first flange (8) connectable to a power input;
- a power drive shaft (6) with a first end placed substantially in a position corresponding to said first flange (8) and a second end opposite said first end;
- a second flange (20) in one piece with said power drive shaft (6) placed in a position corresponding to said second end; **characterized by**
- an electric motor (9) comprising a stator (31) fixed to the case (5) and a rotor (32) fixed to a portion of the second flange (20); and
- a clutch (10) comprising a first disc assembly (11) rotating as a unit with said first flange (8), a second disc assembly (12) rotating as a unit with said power drive shaft (6), there being provided means of engagement adapted to engage said first disc assembly (11) with said second disc assembly (12), wherein said means comprise a piston (28) adapted to compress said first and said second disc assemblies (11, 12) to make them rotate as a unit, said piston (28) being connected in an articulated manner to at least one centrifugal weight (22) rotating as a unit with the first flange (8).

2. An auxiliary propulsion system, according to claim 1, **characterized in that** said first disc assembly (11) is mounted on a bell housing (13) connected as a unit to the first flange (8), said at least one centrifugal weight (22) being hinged to said bell housing (13) with the possibility of rotating on an axis perpendicular to the axis of the power drive shaft (6).

3. An auxiliary propulsion system, according to claim 1 or 2, **characterized in that** said at least one centrifugal weight (22) is hinged to one end of a connecting rod (24) which is in turn connected to said piston (28).

4. An auxiliary propulsion system, according to claims 2 and 3, **characterized in that** it is provided with a plurality of centrifugal weights (22) arranged angularly equidistant on said bell housing (13).

5. An auxiliary propulsion system, according to claims 3 and 4, **characterized in that** each of said centrifugal weights (22) has a substantially L-shape cross section with a first arm (22a) which extends from one end to a first pin (23) connecting it to the bell housing (13), and a second transverse arm (22b) which extends from said first pin (23) to a second pin (27) connecting it to the corresponding connecting rod (24).

6. An auxiliary propulsion system, according to claim 4 or 5, **characterized in that** it is provided with a return device (38) intended to return the piston (28) to a position in which it does not compress the first (11) and second (12) disc assemblies, said return device comprising elastic means adapted to exert an axial force contrary to that exerted by the centrifugal weights (22).

7. An auxiliary propulsion system, according to any of the previous claims, **characterized in that** said motor (9) is a ring or "torque" type electric motor with permanent magnets.

## Patentansprüche

1. Ein Hilfsantriebssystem, umfassend:
- ein Gehäuse (5), geeignet, um mit mindestens einer Input- oder Output-Vorrichtung verbunden zu werden;
- ein erster Flansch (8), verbindbar mit einem Leistungseingang;
- eine Kraftantriebswelle (6), die mit einem ersten Ende im Wesentlichen in einer Position platziert ist, die mit dem besagten ersten Flansch (8) übereinstimmt, und mit einem zweiten Ende, das dem besagten ersten Ende gegenüberliegt;
- ein zweiter Flansch (20) in einem Stück mit besagter Kraftantriebswelle (6), befestigt in einer Position in Übereinstimmung mit dem besagten zweiten Ende; **gekennzeichnet durch**
- einen elektrischen Motor (9), umfassend einen Ständer (31), der an dem Gehäuse (5) befestigt ist, und einen Rotor (32), der an einem Segment des zweiten Flansch (20) befestigt ist; sowie
- eine Kupplung (10), umfassend eine erste Scheiben-Anordnung (11), die als Einheit mit besagtem ersten Flansch (8) rotiert, eine zweite Scheiben- Anordnung (12), die als Einheit mit besagter Kraftantriebswelle (6) rotiert, wobei Mittel zur Kupplung vorgesehen sind, geeignet, um besagte erste Scheiben-Anordnung (11) mit besagter zweiten Scheiben-Anordnung (12) in Eingriff kommen zu lassen, wobei besagte Mittel einen Kolben (28) umfassen, geeignet, um besagte erste und zweite Scheiben- Anordnung (11, 12) zu komprimieren, um sie als Einheit kreisen zu lassen, wobei besagter Kolben (28) in einer gelenkigen Art verbunden ist mit mindestens einem Zentrifugalgewicht (22), das als Einheit mit dem ersten Flansch (8) rotiert.

2. Ein Hilfsantriebssystem gemäß Anspruch 1, **gekennzeichnet durch** die Tatsache, dass besagte erste Scheiben-Anordnung (11) auf einer Kupplungsglocke (13) montiert ist, verbunden als Einheit mit dem ersten Flansch (8), wobei das besagte mindestens eine Zentrifugalgewicht (22) gelenkig verbunden ist mit der besagten Kupplungsglocke (13), mit der Möglichkeit, entlang einer Achse im rechten Winkel zur Achse der Kraftantriebswelle (6) zu rotieren.

3. Ein Hilfsantriebssystem gemäß Anspruch 1 oder 2, **gekennzeichnet durch** die Tatsache, dass das besagte mindestens eine Zentrifugalgewicht (22) gelenkig verbunden ist mit einem Ende einer Verbindungsstange (24), die wiederum mit besagtem Kolben (28) verbunden ist.

4. Ein Hilfsantriebssystem, gemäß den Ansprüchen 2 und 3, **gekennzeichnet durch** die Tatsache, dass es mit einer Mehrzahl von Zentrifugalgewichten (22) versehen ist, die winklig in gleichem Abstand auf besagter Kupplungsglocke (13) angeordnet sind.

5. Ein Hilfsantriebssystem gemäß den Ansprüchen 3 und 4, **gekennzeichnet durch** die Tatsache, dass jedes der besagten Zentrifugalgewichte (22) im Wesentlichen einen L-förmigen Querschnitt mit einem ersten Arm (22a) besitzt, der sich von einem Ende zu einem ersten Stift (23) erstreckt und ihn mit der Kupplungsglocke (13) verbindet, und mit einem zweiten quer verlaufenden Arm (22b), der sich von dem besagten ersten Stift (23) zu einem zweiten Stift (27) erstreckt und ihn mit der entsprechenden Verbindungsstange (24) verbindet.

6. Ein Hilfsantriebssystem, gemäß den Ansprüchen 4 und 5, **gekennzeichnet durch** die Tatsache, dass es mit einer Rücklaufeinrichtung (38) versehen ist, die dazu da ist, den Kolben (28) in eine Position zurückzuversetzen, die die erste (11) und zweite (12) Scheiben-Anordnung nicht komprimiert, wobei besagte Rücklaufeinrichtung elastische Mittel umfasst, die geeignet sind, eine axiale Kraft auszuüben, entgegengesetzt der, die durch die Zentrifugalgewichte (22) ausgeübt wird.

7. Ein Hilfsantriebssystem, gemäß einem jeglichen der vorherigen Ansprüche, **gekennzeichnet durch** die Tatsache, dass besagter Motor (9) ein Ring- oder Elektromotor vom Drehmomenttyp mit permanenten Magneten ist.

## Revendications

1. Système de propulsion auxiliaire comprenant :
- un carter (5) prévu pour être raccordé à au moins un dispositif d'entrée ou de sortie ;
- une première bride (8) raccordable à une entrée d'alimentation ;
- un arbre d'entraînement (6) avec une première extrémité placée substantiellement dans une position correspondant à ladite première bride (8) et une deuxième extrémité opposée à ladite première extrémité ;
- une deuxième bride (20) en une pièce avec ledit arbre d'entraînement (6) placé dans une position correspondant à ladite deuxième extrémité ; **caractérisé par**
- un moteur électrique (9) comprenant un stator (31) fixé au carter (5) et un rotor (32) fixé à une portion de la deuxième bride (20) ; et
- un embrayage (10) comprenant une premier ensemble de disque (11) pivotant en tant qu'unité avec ladite première bride (8), un deuxième ensemble de disque (12) pivotant en tant qu'unité avec ledit arbre d'entraînement (6), des moyens d'engagement étant prévus pour engager ledit premier ensemble de disque (11) avec ledit deuxième ensemble de disque (12), où lesdits moyens comprennent un piston (28) prévus pour comprimer ledit premier et ledit deuxième ensembles de disque (11, 12) pour les faire pivoter en tant qu'unité, ledit piston (28) étant raccordé de manière articulée à au moins une masselotte (22) pivotant en tant qu'unité avec la première bride (8).

2. Système de propulsion auxiliaire selon la revendication 1, **caractérisé par le fait que** ledit premier ensemble de disque (11) est monté sur un logement en cloche (13) raccordé en tant qu'unité à la première bride (8), ladite au moins une masselotte (22) étant fixée par charnière audit logement en cloche (13) avec la possibilité de pivoter sur un axe perpendiculaire à l'axe de l'arbre d'entraînement (6).

3. Système de propulsion auxiliaire selon les revendications 1 ou 2, **caractérisé par le fait que** ladite au moins une masselotte (22) est fixée par charnière à une extrémité d'une bielle (24) qui est à son tour raccordée audit piston (28).

4. Système de propulsion auxiliaire selon les revendications 2 et 3, **caractérisé par le fait qu'**il est doté d'une multitude de masselottes (22) disposées de manière équidistante du point de vue angulaire sur ledit logement en cloche (13).

5. Système de propulsion auxiliaire selon les revendications 3 et 4, **caractérisé par le fait que** chacune desdites masselottes (22) possède une section transversale substantiellement en forme de L avec un premier bras (22a) qui s'étend entre une extrémité et une première cheville (23) le raccordant au logement en cloche (13), et un deuxième bras transversal (22b) qui s'étend entre ladite première cheville (23) et une deuxième cheville (27) le raccordant à la bielle correspondante (24).

6. Système de propulsion auxiliaire selon les revendications 4 ou 5, **caractérisé par le fait qu'**il est doté d'un dispositif de retour (38) prévu pour faire revenir le piston (28) dans une position où il ne comprime pas les premier (11) et deuxième (12) ensembles de disque, ledit dispositif de retour comprenant des moyens élastique prévus pour exercer une force axiale contraire à la force exercée par les masselottes (22).

7. Système de propulsion auxiliaire selon l'une des revendications précédentes, **caractérisé par le fait que** ledit moteur (9) est un moteur électrique de type anneau ou « couple » avec aimants permanents.
